# FASCICULE DE BREVET EUROPEEN

(11) **EP 0 634 904 B1**
(45) Date de publication et mention de la délivrance du brevet: **05.03.1997**
(21) Numéro de dépôt: 93908993.4
(22) Date de dépôt: 05.04.1993
(51) Int. Cl.: A47J 31/40

(54) **DISPOSITIF POUR LA PERCOLATION SOUS PRESSION, AUTOMATIQUE ET INSTANTANEE DE LIQUIDES ALIMENTAIRES**
VORRICHTUNG ZUR AUTOMATISCHEN UND INSTANTANEN PERKOLATION UNTER DRUCK VON GETRÄNKEN
DEVICE FOR INSTANT, AUTOMATIC, PRESSURIZED PERCOLATION OF FOOD LIQUIDS

(30) Priorité: 06.04.1992 FR 9204469
(43) Date de publication de la demande: 25.01.1995
(73) Titulaire: VERSINI, Rolland, F-13480 Calas (FR)
(72) Inventeur: VERSINI, Rolland, F-13480 Calas (FR)
(74) Mandataire: Roman, Michel
(86) Numéro de dépôt international: FR9300340
(87) Numéro de publication internationale: WO9319655

(56) Documents cités:
- BE-A- 745 939
- FR-A- 2 657 244

## Description

La présente invention a pour objet un dispositif pour la percolation sous pression automatique et instantanée de liquides alimentaires, et notamment de boissons chaudes telles que le café.

L'invention est destinée à permettre la confection, dans des conditions entièrement automatiques et sans intervention humaine autre que l'envoi d'un signal de commande initial, d'une boisson chaude telle qu'un café de type "expresso", c'est-à-dire délivré et mis à la disposition du consommateur immédiatement au sortir de la phase de percolation.

Les dispositifs réalisés à ce jour, et en particulier celui décrit dans le brevet N° FR-A-2 594 671 du même inventeur, sont le plus souvent basés sur l'utilisation d'un cylindre vertical constituant la chambre d'infusion dans lequel est déversé une certaine quantité de café moulu retenu par une grille constituant le fond dudit cylindre. Un piston se déplaçant verticalement vient compresser la poudre de café, au travers de laquelle de l'eau chaude est alors injectée puis évacuée. L'eau chaude parvient en général dans le cylindre en passant par le piston mobile de compression, ce qui nécessite une tubulure flexible généralement fragile. Le fond du cylindre est mobile et peut remonter dans ce dernier afin de permettre l'extraction de la poudre qui est évacuée à l'aide d'un racloir mobile. L'ensemble est actionné à l'aide de mécanismes en général complexes et coûteux, comportant des systèmes d'encliquetage mécaniques et autres, et commandés par des dispositifs électro-mécaniques ou électroniques, associés à une série de micro-contacts, dont les défaillances sont fréquentes. La présence du piston mobile au-dessus du cylindre rend l'opération de déversement de la poudre de café dans celui-ci malaisée, en imposant un cheminement compliqué et des moyens de guidage mobiles. Enfin, l'alimentation en eau chaude et l'évacuation du café infusé se fait par un réseau de conduits générateur de pertes calorifiques.

Les brevets FR-A-2 657 244 et WO-A-91/10391, du même inventeur remédie partiellement à ces défauts. Il décrivent un dispositif équipé d'un groupe mécanique disposé horizontalement dans lequel les mouvements des pièces mobiles sont tous provoqués par deux crémaillères à déplacements horizontaux inversés entraînant une série de traverses coulissant sur des colonnes, la chambre d'infusion à axe horizontal, dans laquelle le passage de l'eau chaude se fait verticalement, étant prolongée par une chambre de remplissage mobile horizontale recevant le déversement direct de la poudre de café, qui est ensuite évacuée par un racloir à mouvement également horizontal mu par un levier rotatif. Une chaudière située immédiatement au-dessous du groupe mécanique est raccordée directement à la chambre d'infusion par des raccords rapides d'injection d'eau et d'évacuation du café infusé, sans tubulure, le café infusé repassant par le corps de ladite chaudière. La chambre d'infusion est pourvue d'un fond mobile avec un système d'entraînement à encliquetage magnétique. Enfin le groupe mécanique est entraîné grâce à un accouplement rapide par un moteur dont l'arrêt et l'inversion de marche sont commandés directement par un capteur de couple électronique contrôlant la pression et supprimant les micro-contacts.

L'usinage de ce dispositif est toutefois relativement complexe et coûteux, particulièrement en ce qui concerne les traverses, les colonnes et le racloir. En outre, l'encliquetage magnétique ne présente pas une fiabilité parfaite en raison des risques d'accumulation de poudre de café sur les pièces aimantées.

Le dispositif selon la présente invention, qui apporte une série de perfectionnements aux brevets FR-A-2 657 244 et WO-A-91/10391, supprime tous ces inconvénients. En effet, il permet de réaliser une machine automatique de percolation sous pression comportant un petit nombre de pièces, extrêmement fiable, d'un entretient particulièrement aisé, d'un excellent rendement thermique et d'un prix de revient compétitif.

Il est constitué par la combinaison d'un groupe mécanique horizontal amovible équipé d'une chambre d'infusion à fond mobile prolongée par une chambre de remplissage se déplaçant conjointement avec ledit fond mobile, d'une chaudière située au-dessous du groupe mécanique équipée d'un élément verseur amovible et raccordée à la chambre d'infusion, et d'une unité d'entraînement actionnant l'ensemble des organes mobiles du groupe mécanique, les organes principaux de ce dernier étant réalisé à partir de profilés fonctionnels, en particulier un rail fixe, la chambre d'infusion ainsi qu'une pièce mobile coulissant sur ledit rail fixe et portant le piston de compression ainsi qu'une crémaillère principale entraînant une crémaillère secondaire par l'intermédiaire d'un pignon fixe, la chambre de remplissage et le fond mobile coulissant également sur ce rail fixe et étant rendus solidaires par une tige dont la position et le profil sont déterminés pour contrôler le mouvement d'un racloir pivotant sur un pivot horizontal porté par la chambre d'infusion.

Les revendications dépendantes définient des modifications du dispositif selon la revendication 1.

Sur les dessins annexés, donnés à titre d'exemple non limitatif d'une des formes de réalisation de l'objet de l'invention:
les figures 1 à 3 représentent, vu de l'avant, le groupe mécanique à trois stades différents du cycle de fonctionnement, respectivement en position d'attente, avant le déversement de la poudre de café, en fin de période de compression et après éjection de la poudre infusée par le racloir,
la figure 4 est une vue en bout du groupe mécanique, suivant la flèche A de la figure 1, avec l'élément verseur amovible en place,
les figures 5 et 6 sont des coupes transversales du groupe mécanique, respectivement suivant les flèches B-B et C-C des figures 2 et 3,
et la figure 7 est une vue de dessus éclatée de l'ensemble du dispositif, montrant le groupe mécanique, la chaudière, l'unité d'entraînement en coupe horizontale partielle et l'élément verseur.

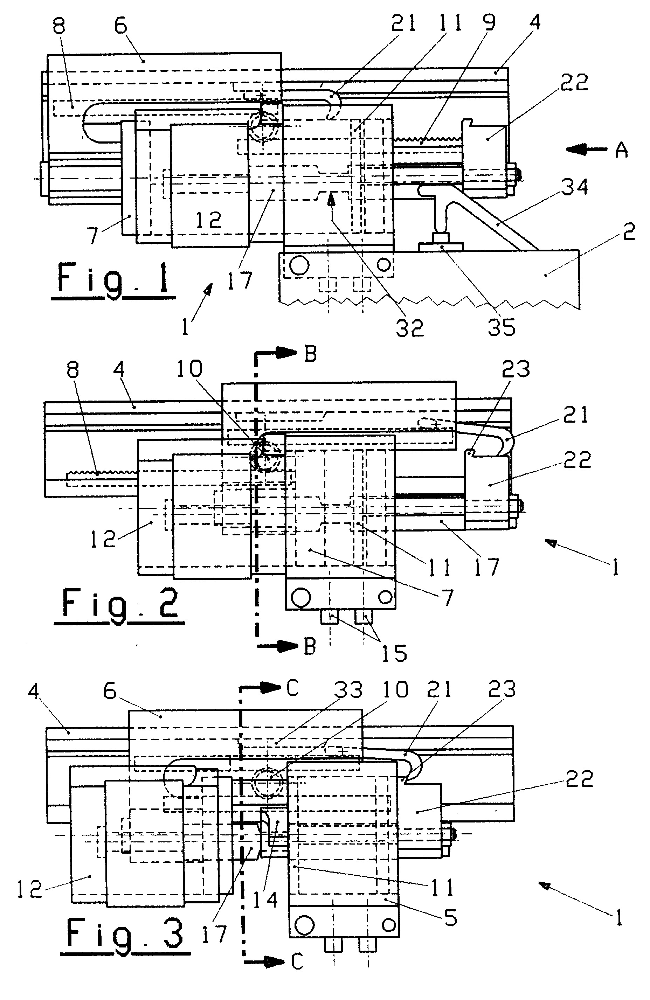

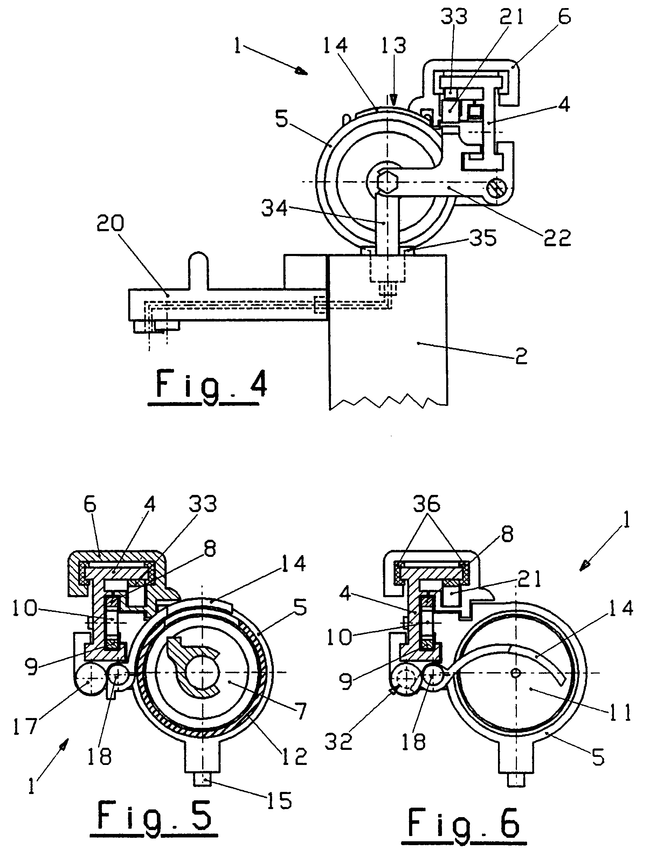

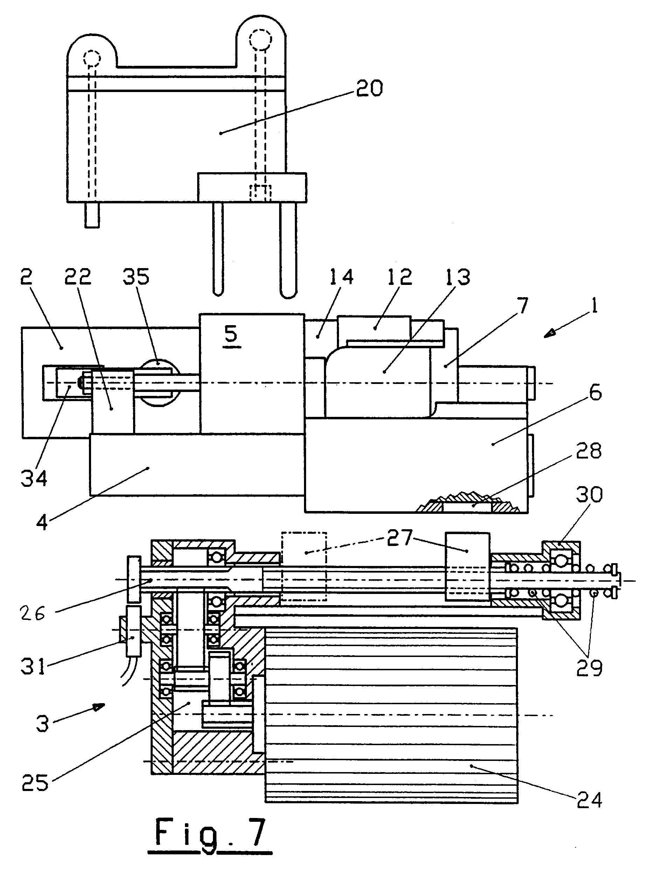

Le dispositif, figures 1 à 7, est constitué d'un groupe mécanique 1 horizontal amovible sans outillage, d'une chaudière 2 de production d'eau chaude située immédiatement au-dessous du groupe mécanique 1 et raccordée à une chambre d'infusion 5 par des raccords rapides 15 d'injection d'eau et d'évacuation du café infusé, d'une unité d'entraînement 3 motorisée à inversion de marche automatique et enfin, d'un élément verseur 20 amovible monté sur l'avant de la chaudière 2 et dont la mise en place verrouille le groupe mécanique 1 sur cette dernière.

Le groupe mécanique 1 comporte un piston de compression 7 se déplaçant horizontalement dans la chambre d'infusion 5 cylindrique à fond mobile 11 dans laquelle le passage de l'eau chaude se fait par deux grilles périphériques transversalement à l'axe du piston de compression, ladite chambre d'infusion étant prolongée par une chambre de remplissage 12 mobile horizontalement, conjointement avec le fond mobile 11, et pourvue d'une ouverture supérieure 13 permettant de recevoir le déversement direct de la poudre de café, celle-ci étant évacuée par un racloir 14 après percolation.

Le passage de l'eau chaude peut également se faire par deux séries de perforations périphériques réparties chacune sur 360 degrés dans la chambre d'infusion 5 et décalées axialement de manière à provoquer une progression de l'eau parallèle à l'axe de ladite chambre d'infusion.

L'ensemble des organes mobiles est actionnés par l'unité d'entraînement 3 motorisée grâce à un accouplement rapide provoquant le déplacement d'une crémaillère principale 8 et d'une crémaillère secondaire 9 dans des directions opposées, cette dernière agissant sur la chambre de remplissage 12 et le fond mobile 11, de manière à permettre successivement le remplissage de la chambre d'infusion 5, la compression de la poudre de café dans cette dernière et son évacuation après percolation.

Le groupe mécanique 1 est réalisé à partir de profilés fonctionnels formant respectivement un rail fixe 4, la chambre d'infusion 5 ainsi qu'une pièce mobile 6 coulissant sur ledit rail fixe parallèlement à l'axe de la chambre d'infusion 5. Cette pièce mobile porte le piston de compression 7, la crémaillère principale 8 et un crochet articulé 21 s'encliquetant sur un ergot 23 d'une butée mobile 22 qui coulisse sur le rail fixe 4, à l'arrière de la chambre d'infusion, et sur laquelle sont montés l'axe du fond mobile 11, ainsi qu'une tige 17 solidaire de la chambre de remplissage 12, et dont la position et le profil sont déterminés pour contrôler le mouvement du racloir 14, ce dernier pivotant dans un plan perpendiculaire à l'axe de la chambre d'infusion 5 autour d'un pivot horizontal 18 porté par celle-ci. La crémaillère principale 8, par l'intermédiaire d'un pignon 10 tournant sur un axe solidaire du rail fixe 4, actionne la crémaillère secondaire 9, cette dernière agissant sur la butée mobile 22 pour amener la chambre de remplissage 12 en contact avec la chambre d'infusion 5 et faire rentrer le fond mobile 11 dans cette dernière.

L'unité d'entraînement 3 est composée d'un moteur 24 entraînant par l'intermédiaire d'un réducteur 25 une vis 26 portant un toc taraudé 27 s'engageant dans un logement 28 prévu à cet effet dans la pièce mobile 6 du groupe mécanique 1. La vis 26 peut se déplacer axialement dans les deux sens et est normalement maintenue en position intermédiaire par deux ressorts 29 s'appuyant sur un palier monté dans un bloc 30 solidaire du bâti de l'unité d'entraînement et situé à une extrémité de ladite vis. Celle-ci porte à son autre extrémité l'élément mobile d'un capteur de proximité 31. Lorsque le toc 27 arrive en fin de course, il provoque un déplacement axial de la vis 26 détecté par le capteur de proximité, ce qui engendre une information électrique de sécurité utilisée pour commander l'inversion de marche ou l'arrêt du moteur en cas d'anomalie.

Le contrôle de la marche du moteur 24, ainsi que des autres fonctions de l'appareil, chaudière, pompe, moulin à café, etc, sont assurées par un programmateur électromécanique ou électronique associé à un capteur mesurant le couple dudit moteur.

En début de cycle (figure 1), la pièce mobile 6 du groupe mécanique est positionnée à l'extrémité du rail fixe 4, côté chambre de remplissage 12 et la butée mobile 22 à l'autre extrémité, ladite chambre de remplissage est appliquée contre la chambre d'infusion 5, le fond mobile 11 se trouve à l'arrière de celle-ci et le racloir 14 est relevé. Lorsque l'ordre de mise en route est donné, la poudre de café est tout d'abord déversée dans la chambre de remplissage par l'ouverture 13, puis le toc 27 entraîne la pièce mobile vers l'autre extrémité du rail fixe. Le piston de compression 7 pousse la poudre de café vers la chambre d'infusion et la comprime finalement dans cette dernière (figure 2). La résistance rencontrée par le piston de compression entraîne alors le déplacement axial de la vis 26 de l'unité d'entraînement, ce qui provoque l'arrêt, l'infusion puis l'inversion du mouvement.

Au moment où la pièce mobile 6 démarre en sens inverse, le crochet articulé 21 a dépassé l'ergot 23 de la butée mobile 22, ce qui fait qu'il va entraîner cette dernière et provoquer le déplacement du fond mobile 11 vers l'avant de la chambre d'infusion 5, l'écartement de la chambre de remplissage 12 et le déplacement de la tige 17. Celle-ci porte un étranglement 32 qui va permettre au racloir 14 de s'abaisser sous l'action d'un ressort (non représenté) à l'instant ou le fond mobile sera parvenu à l'avant de la chambre de d'infusion (figure 3). A ce moment, le crochet articulé 21 est relevé grâce à une rampe 33 solidaire du rail fixe 4 et n'entraîne plus la butée mobile.

Entre-temps, cette dernière en se déplaçant, a abaissé une came 34 montée sur la chaudière 2 et actionnant un clapet 35 pour mettre à l'air libre le circuit d'alimentation en eau chaude, de manière à éviter de mouiller la poudre à café infusée, et à faciliter ainsi son évacuation.

En continuant son mouvement, la pièce mobile 6 amène la crémaillère secondaire 9 en contact avec la butée mobile 22 qui va être repoussée vers sa position initiale en même temps que la chambre de remplissage 12, le fond mobile 11 et le repositionnement du racloir 14. Le cycle est alors terminé, un nouveau cycle peut démarrer.

Selon une variante d'exécution, la chaudière 2 est placée derrière le groupe mécanique 1 et raccordée à la chambre d'infusion 5 par un raccord rapide 15 d'injection d'eau, l'évacuation du café infusé s'effectuant directement par un conduit dirigé vers l'avant.

La mise à l'air libre s'effectuera alors par un canal longitudinal pratiqué dans la tige d'entraînement du fond mobile 11, prolongée pour pouvoir pénétrer dans un logement adéquat d'une butée fixe (non représentée) solidaire du rail fixe 4 et située au-delà de la butée mobile 22. Lorsque le fond mobile 11 se trouve à l'arrière de la chambre d'infusion 5, durant la percolation, l'extrémité de ladite tige est engagée dans la butée fixe agencée de manière à la rendre étanche. Au contraire, lorsque le fond mobile se déplace pour provoquer l'expulsion de la poudre infusée, l'extrémité de la tige se dégage ce qui permet à l'air de passer.

Selon une seconde variante d'exécution, l'unité d'entraînement 3 est composée d'un vérin à double effet actionné au moyen d'eau sous pression provenant de la pompe fournissant également l'eau destinée à infuser le café. Dans ce cas, le contrôle de la position du vérin, ainsi que de la quantité d'eau à infuser, pourra avantageusement être effectué grâce à un unique décimètre associé à un système programmable actionnant des électrovannes.

On peut également envisager de réaliser d'autres éléments tels que la chambre de remplissage 12 ou la butée mobile 22 en utilisant des profilés fonctionnels. D'autre part, si la pièce mobile 6 est fabriquée par extrusion, il est intéressant de la réaliser à partir de deux profilés fonctionnels assemblés après découpe, en vue de diminuer les chutes de matière, l'un de ces profilés constituant la partie coulissante et l'autre le support du piston de compression 7.

Les profilés fonctionnels peuvent être extrudés en alliage léger ou en matière synthétique renforcée ou être moulés en cas de fabrication en nombre important.

Les éléments coulissant sur le rail fixe 4, par exemple la chambre de remplissage 12 et la butée mobile 22 seront avantageusement réalisés en matériau à faible coefficient de frottement tel que le polyamide, en particulier lorsque ledit rail est métallique. Si ce dernier et la pièce mobile 6 sont réalisés tous deux en alliage léger, des glissières 36 en polyamide ou similaire seront interposées entre eux.

La conception du système décrit permet la fabrication d'une machine très compacte et susceptible d'être réalisée en séries importantes, à des coûts très raisonnables, ce qui permet d'envisager un usage aussi bien domestique que professionnel.

Le positionnement des divers éléments constitutifs donne à l'objet de l'invention un maximum d'effets utiles qui n'avaient pas été, à ce jour, obtenus par les dispositifs similaires.

## Revendications

1. Dispositif pour la percolation sous pression, automatique et instantanée de liquides alimentaires, et notamment de boissons chaudes telles que le café, constitué d'un groupe mécanique (1) amovible sans outillage, réalisé à partir de profilés fonctionnels formant au moins un rail fixe (4) et comportant un piston de compression (7) se déplaçant horizontalement dans une chambre d'infusion (5) à fond mobile (11) prolongée par une chambre de remplissage (12) mobile horizontalement conjointement avec le fond mobile (11), et pourvue d'une ouverture supérieure (13) permettant de recevoir le déversement direct de la poudre de café, celle-ci étant évacuée par un racloir (14), une chaudière (2) de production d'eau chaude étant accolée au groupe mécanique (1) et raccordée à la chambre d'infusion (5) par des raccords rapides (15), l'ensemble des organes mobiles étant actionnés par une unité d'entraînement (3) à inversion de marche provoquant le déplacement d'une crémaillère principale (8) et d'une crémaillère secondaire (9) dans des directions opposées, cette dernière agissant sur la chambre de remplissage (12) et le fond mobile (11), de manière à permettre successivement le remplissage de la chambre d'infusion (5), la compression des produits de percolation et leur évacuation,
caractérisé par le fait que la chambre d'infusion (5) et une pièce mobile (6) coulissent sur le rail fixe (4), cette dernière portant le piston de compression (7) et entraînant la crémaillère principale (8) qui lui est solidaire, celle-ci actionnant la crémaillère secondaire (9) en sens inverse par l'intermédiaire d'un pignon (10) solidaire du rail fixe (4), la chambre de remplissage (12) et le fond mobile (11) coulissant également sur le rail fixe (4) et étant rendus solidaires entre eux par une tige (17) dont la position et le profil sont déterminés pour contrôler le mouvement du racloir (14), ce dernier pivotant dans un plan vertical perpendiculaire à l'axe de la chambre d'infusion (5) autour d'un pivot horizontal (18) porté par celle-ci.

2. Dispositif selon la revendication 1, se caractérisant par le fait que l'axe du fond mobile (11), ainsi que la tige (17) solidaire de la chambre de remplissage (12) sont fixés sur une butée mobile (22) située à l'arrière de la chambre d'infusion (5), et coulissant sur le rail fixe (4) grâce à l'action d'une part, de la crémaillère secondaire (9) et, d'autre part, d'un crochet articulé (21) porté par la pièce mobile (6) s'encliquetant sur un ergot (23) de ladite butée mobile.

3. Dispositif selon l'une quelconque des revendications précédentes, se caractérisant par le fait que les profilés fonctionnels sont extrudés en alliage léger ou en matière synthétique renforcée.

4. Dispositif selon les revendications 1 et 2, se caractérisant par le fait que les profilés fonctionnels sont moulés en alliage léger ou en matière synthétique renforcée.

5. Dispositif selon l'une quelconque des revendications précédentes, se caractérisant par le fait que la chaudière (2) est située immédiatement au-dessous du groupe mécanique (1) et raccordée à la chambre d'infusion (5) par des raccords rapides (15) d'injection d'eau et d'évacuation du café infusé, et qu'un élément verseur (20) amovible est monté sur l'avant de ladite chaudière, et conçu de telle sorte que sa mise en place verrouille le groupe mécanique (1) sur cette dernière.

6. Dispositif selon l'une quelconque des revendications 1 à 4, se caractérisant par le fait que la chaudière (2) est placée derrière le groupe mécanique (1) et raccordée à la chambre d'infusion (5) par un raccord rapide (15) d'injection d'eau, l'évacuation du café infusé s'effectuant directement par un conduit dirigé vers l'avant.

7. Dispositif selon la revendication 6, se caractérisant par le fait que la mise à l'air libre s'effectue par un canal longitudinal pratiqué dans la tige d'entraînement du fond mobile (11), prolongée pour pouvoir pénétrer dans un évidement d'une butée fixe solidaire du rail fixe (4), située au-delà de la butée mobile (22) et agencée pour que l'extrémité de ladite tige d'entraînement soit rendue étanche en étant engagée dans ledit évidement durant la percolation, et se dégage en permettant à l'air de passer lorsque le fond mobile se déplace pour provoquer l'expulsion de la poudre infusée.

8. Dispositif selon l'une quelconque des revendications précédentes, se caractérisant par le fait que l'unité d'entraînement (3) est composée d'un moteur (24) entraînant par l'intermédiaire d'un réducteur (25) une vis (26) portant un toc (27) taraudé s'engageant dans un logement (28) prévu à cet effet dans la pièce mobile (6) du groupe mécanique (1), la vis (26) pouvant se déplacer axialement dans les deux sens et étant normalement maintenue en position intermédiaire par deux ressorts (29) s'appuyant sur un palier monté dans un bloc (30) solidaire du bâti de l'unité d'entraînement et situé à une extrémité de ladite vis, celle-ci portant à son autre extrémité l'élément mobile d'un capteur de proximité (31) qui commande l'inversion de marche ou l'arrêt du moteur en cas d'anomalie, lorsque le toc (27), arrivé en fin de course, provoque un déplacement axial de la vis (26).

9. Dispositif selon la revendication 8, se caractérisant par le fait que les différents organes du groupe mécanique (1) sont agencés pour que l'ordre de mise en route provoque d'abord le déplacement du toc (27) qui entraîne la pièce mobile (6) de manière à ce que le piston de compression (7) pousse la poudre de café, préalablement déversée dans la chambre de remplissage (12), dans la chambre d'infusion (5) et la comprime dans cette dernière, la résistance rencontrée par le piston de compression provoquant alors l'arrêt du moteur, l'infusion du café, puis l'inversion de marche et le déplacement, grâce au crochet articulé (21), de la butée mobile (22), de la tige (27) et du fond mobile (11) vers l'avant de la chambre d'infusion (5), ainsi que l'écartement de la chambre de remplissage (12), la tige (27) portant un étranglement (32) permettant au racloir (14) de s'abaisser sous l'action d'un ressort à l'instant ou le fond mobile est parvenu à l'avant de la chambre d'infusion, le crochet articulé (21) étant alors relevé grâce à une rampe (33) solidaire du rail fixe (4) et n'entraînant plus la butée mobile, la pièce mobile (6) amenant alors la crémaillère secondaire (9) en contact avec la butée mobile (22) qui est repoussée vers sa position initiale en même temps que la chambre de remplissage (12), le fond mobile (11) et le racloir (14).

10. Dispositif selon la revendication 9, se caractérisant par le fait que la butée mobile (22) est conçue pour pouvoir, au début de son mouvement, abaisser une came (34) montée sur la chaudière (2) et agissant sur un clapet (35) pour mettre à l'air libre le circuit d'alimentation en eau chaude, de manière à éviter de mouiller la poudre à café infusée, et à faciliter ainsi son évacuation.

11. Dispositif selon l'une quelconque des revendications 1 à 7, se caractérisant par le fait que l'unité d'entraînement (3) est composée d'un vérin à double effet actionné au moyen d'eau sous pression provenant de la pompe fournissant également l'eau destinée à infuser le café, et que le contrôle de la position du vérin, ainsi que de la quantité d'eau à infuser est effectué grâce à un unique décimètre associé à un système programmable actionnant des électrovannes.

12. Dispositif selon l'une quelconque des revendications précédentes, se caractérisant par le fait que le passage de l'eau chaude se fait par deux séries de perforations périphériques réparties chacune sur 360 degrés dans la chambre d'infusion (5) et décalées axialement de manière à provoquer une progression de l'eau parallèle à l'axe de ladite chambre d'infusion.

## Claims

1. Device for automatic and instantaneous pressurized percolation of liquid foodstuffs, especially hot drinks such as coffee, consisting of a mechanical unit (1), removable without tooling, constructed from functional sections forming at least one fixed rail (4) and including a compression piston (7) moving horizontally in an infusion chamber (5) with mobile bottom (11) extended by a filling chamber (12) which is horizontally mobile jointly with the mobile bottom (11), and fitted with an upper opening (13) for receiving a coffee powder discharge directly, this being evacuated by a rake (14), a boiler (2) for producing hot water being attached to the mechanical unit (1) and connected to the infusion chamber (5) by quick connectors (15), all the mobile devices being operated by a drive unit (3) with reverse drive causing the movement of a main rack (8) and a secondary rack (9) in opposing directions, the latter acting on the filling chamber (12) and the mobile bottom (11), so as to allow filling of the infusion chamber (5), compression of the percolation products and their evacuation in succession,
characterized in that the infusion chamber (5) and mobile part (6) slide on a fixed rail (4), the latter bearing a compression piston (7) and driving the main rack (8) which is joined to it, this actuating the secondary rack (9) in the opposite direction through a pinion wheel (10) joined to the fixed rail (4), the filling chamber (12) and the mobile bottom (11) also sliding on the fixed rail (4) and being joined between them by a rod (17) whose position and profile are determined to control the movement of the rake (14), the latter pivoting in the vertical plane perpendicular to the axis of the infusion chamber (5) around a horizontal pivot (18) carried by the chamber.

2. Device as per claim 1 characterized in that a mobile bottom (11) and the rod (17) joined to the filling chamber (12) are fixed on a mobile stop (22) situated at the rear of the infusion chamber (5) and sliding on the fixed rail (4) through the action on the one hand of the secondary rack (9) and on the other by an articulated hook (21) carried by a mobile part (6) which clicks onto a spigot (23) on the said mobile stop.

3. Device as per any one of the aforesaid claims characterized in that the functional sections are light alloy or reinforced synthetic material extrusions.

4. Device as per claims 1 and 2 characterized in that the functional sections are moulded in light alloy or reinforced synthetic material.

5. Device as per any one of the aforesaid claims characterized in that the boiler (2) is situated immediately below the mechanical unit (1) and connected to the infusion chamber (5) by quick connect coupling (15) for water injection and evacuation of infused coffee and that a movable pour element (20) is fitted on the front of the said boiler and designed so that when installed it locks the mechanical unit (1) on the latter.

6. Device as per any one of claims 1 to 4 characterized in that the boiler (2) is placed behind the mechanical unit (1) and connected to the infusion chamber (5) by a quick connect coupling (15) for water injection, evacuation of infused coffee taking place directly by a pipe directed towards the front.

7. Device as per claim 6 characterized in that connection to the open air takes place by a longitudinal channel in the mobile bottom drive rod (11), extended in order to penetrate into a hollow of a fixed stop joined to the fixed rail (4) situated beyond the mobile stop (22) and arranged so that the end of the said drive rod is made leaktight by engaging in the said hollow during percolation, and is released by allowing the air to pass when the mobile bottom moves to cause expulsion of the infused powder.

8. Device as per any one of the aforesaid claims characterized in that the drive unit (3) consists of a motor (24) driven by reduction gearing (25), a screw (26) with a tapped catch (27) which is inserted into a housing (28) provided to this effect in the mobile part (6) of the mechanical unit (1), the screw (26) being capable of axial movement in both directions and being normally maintained in a midway position by two springs (29) exerting force on a bearing fitted in a block (30) joined to the frame of the drive unit and situated at one end of the said screw, this carrying at its other end the mobile element of a proximity sensor (31) which controls reverse operation or stop of the motor in case of an anomaly when the catch (27) reaches the end of its travel, leading to axial displacement of the screw (26).

9. Device as per claim 8 characterized in that different mechanical unit devices are arranged so that the order of startup causes firstly movement of the catch (27) which drives the mobile part (6) so that the compression piston (7) pushes the coffee powder, previously poured into the filling chamber (12), into the infusion chamber (5) and compresses it in the latter, the resistance encountered by the compression piston then stopping the motor, coffee infusion, and then reverse operation and movement, through the articulated hook (21), the mobile stop (22), the rod (27) and the mobile bottom (11), towards the front of the infusion chamber (5), together with moving apart of the filling chamber (12), rod (27) carrying a narrowing (32) to allow the rake (14) to be lowered under the force of a spring when the mobile bottom has reached the front of the infusion chamber, the articulated hook (21) being then raised through a ramp (33) joined to the fixed rail (4) and no longer driving the mobile stop, the mobile part (6) then bringing the secondary rack (9) into contact with the mobile stop (22) which is pushed towards its initial position at the same time as the filling chamber (12), the mobile bottom (11) and the rake (14).

10. Device as per claim 9 characterized in that the mobile stop (22) is designed in order to, at the start of its movement, lower the cam (34) fitted on the boiler (2) and acting on valve (35) in order to connect the hot water feed circuit to the open air so as to avoid wetting the infused coffee powder, and thereby facilitating its evacuation.

11. Device as per any one of claims 1 to 7 characterized in that the drive unit (3) consists of a dual action hydraulic cylinder operated by pressurized water from the pump also supplying the water for infusing the coffee, and that the hydraulic cylinder position and the quantity of water to be infused are controlled through a single decimetre associated with a programmable system actuating the solenoid valves.

12. Device as per any one of the aforesaid claims, characterized in that the passage of the hot water takes place by two series of peripheral perforations distributed each one on 360° in the infusion chamber (5) and axially offset so as to cause progression of the water parallel to the axis of the said infusion chamber.

## Patentansprüche

1. Vorrichtung zur automatischen und sofortigen Perkolation unter Druck von Nahrungsflüssigkeiten, und insbesondere von warmen Getränken wie Kaffee, bestehend aus einem ohne Werkzeug ausbaubaren mechanischen Aggregat (1), hergestellt aus funktionellen Profilen, die mindestens eine feststehende Schiene (4) bilden und einen Verdichtungskolben (7) enthalten, welcher sich horizontal in einer Infusionskammer (5) mit einer mobilen Rückwand (11) bewegt, verlängert durch eine zusammen mit der mobilen Rückwand (11) horizontal mobile Füllkammer (12), und versehen mit einer oberen Öffnung (13), welche die direkte Aufnahme des Kaffeepulvers ermöglicht, das durch einen Abstreifer (14) ausgeschieden wird; ein Kocher (2) zur Warmwasserproduktion ist an das mechanische Aggregat (1) abgebaut und durch Schnellkupplungen (15) an die Infusionskammer (5) angeschlossen, wobei die Gesamtheit der mobilen Organe durch eine Antriebseinheit (3) mit Laufumkehrung betätigt wird, welche die Bewegung einer Hauptzahnstange (8) und einer sekundären Zahnstange (9) in entgegengesetzten Richtungen bewirkt, die letzte auf die Füllkammer (12) und die mobile Rückwand (11) einwirkt, so daß in der Folge das Füllen der Infusionskammer (5), die Verdichtung der Perkolationsprodukte und ihr Ausscheiden ermöglicht wird,
dadurch gekennzeichnet, daß die Infusionskammer (5) und ein mobiles Teil (6) über die feststehende Schiene (4) gleiten, diese letztere den Verdichtungskolben (7) trägt, und die Hauptzahnstange (8) antreibt, die mit ihr kraftschlüssig verbunden ist, diese die Sekundär-Zahnstange (9) in entgegengesetzter Richtung über ein Ritzel (10) betätigt, welches kraftschlüssig mit der feststehenden Schiene (4) verbunden ist, die Füllkammer (12) und die mobile Rückwand (11) ebenfalls auf der feststehenden Schiene (4) gleiten und über eine Stange (17) kraftschlüssig miteinander verbunden sind, wobei die Position und das Profil der besagten Stange (17) dazu bestimmt sind, die Bewegung des Abstreifers (14) zu kontrollieren, der letztere sich in vertikaler Ebene senkrecht zur Achse der Infusionskammer (5) um einen von dieser getragenen horizontalen Zapfen (18) dreht.

2. Vorrichtung gemäß Anspruch 1, dadurch gekennzeichnet, daß die Spindel der mobilen Rückwand (11) sowie die mit der Füllkammer (12) kraftschlüssig verbundenen Stange (17) an einem mobilen Anschlag (22) befestigt sind, der sich hinten an der Infusionskammer (5) befindet und auf der feststehenden Schiene (4) gleitet, aufgrund der Aktion einerseits der Sekundär-Zahnstange (9) und andererseits einem gelenkigen von dem mobilen Teil (6) gehaltenen Haken (21), welcher in eine Nase (23) des besagten mobilen Anschlags eingreift.

3. Vorrichtung gemäß irgendeinem der vorstehenden Ansprüche, dadurch gekennzeichnet, daß die funktionellen Profile aus Leichtmetall oder einem verstärkten synthetischen Werkstoff stranggepreßt sind.

4. Vorrichtung gemäß den Ansprüchen 1 und 2, dadurch gekennzeichnet, daß die funktionellen Profile aus Leichtmetall oder einem verstärkten synthetischen Werkstoff gegossen bzw. formgepreßt sind.

5. Vorrichtung gemäß irgendeinem der vorstehenden Ansprüche, dadurch gekennzeichnet, daß der Kocher (2) direkt unter dem mechanischen Aggregat (1) angeordnet und mit Schnellkupplungen (15) zur Zuführung des Wassers und dem Auslaß des aufgegossenen Kaffees an die Infusionskammer angeschlossen ist, und daß ein abnehmbares Ausgießelement (20) auf der Vorderseite des besagten Kochers angebracht und so ausgelegt ist, daß sein Anbringen das mechanische Aggregat (1) auf diesem letzteren verschließt.

6. Vorrichtung gemäß irgendeinem der Ansprüche 1 bis 4, dadurch gekennzeichnet, daß der Kocher (2) hinter dem mechanischen Aggregat (1) angeordnet und mit einer Schnellkupplung (15) zur Zuführung des Wassers an die Infusionskammer (5) angeschlossen ist; der Auslaß des aufgegossenen Kaffees erfolgt direkt durch eine nach vorne gerichtete Leitung.

7. Vorrichtung gemäß Anspruch 6, dadurch gekennzeichnet, daß die Lüftung durch einen in der Antriebsstange der mobilen Rückwand (11) ausgeführten Längskanal erfolgt, verlängert zum Eindringen in eine Aussparung eines mit der feststehenden Schiene (4) kraftschlüssig verbundenen feststehenden Anschlags, angebracht hinter dem mobilen Anschlag (22) und so ausgelegt, daß das Ende der Antriebsstange beim Eingreifen in die besagte Aussparung während der Perkolation dicht ist und sich löst, damit das Durchlassen der Luft ermöglicht wird, wenn sich die mobile Rückwand bewegt, um den Auswurf des aufgegossenen Pulvers auszulösen.

8. Vorrichtung gemäß irgendeinem der vorstehenden Ansprüche, dadurch gekennzeichnet, daß die Antriebseinheit (3) aus einem Motor (24) besteht, der mittels eines Getriebes (25) eine Schnecke (26) mit einem Mitnehmer (27) mit Innengewinde antreibt, der in einen für diesen Zweck in dem mobilen Teil (6) des mechanischen Aggregats (1) vorgesehenen Sitz (28) eingreift, wobei sich die Schnecke (26) axial in beiden Richtungen bewegen kann und normalerweise durch zwei Federn (29), die sich auf ein Lager stützen, das in einen Block (30) kraftschlüssig mit der Antriebseinheit montiert ist und sich an einem Ende der besagten Schnecke befindet, in mittlerer Position gehalten wird, welche Schnecke an ihrem anderen Ende einen Näherungsschalter (31) versehen ist, der die Umkehrung der Drehrichtung, bzw. das Abschalten des Motor bei einer Anomalie bewirkt, wenn der Mitnehmer (27), am Ende seines Laufs, eine axiale Bewegung der Schnecke (26) auslöst.

9. Vorrichtung gemäß Anspruch 8, dadurch gekennzeichnet, daß die verschiedenen Organe des mechanischen Aggregats (1) ausgelegt sind, damit die Reihenfolge der Inbetriebnahme zuerst die Bewegung des Mitnehmers (27) verursacht, der das mobile Teil (6) mitnimmt, so daß der Verdichtungskolben (7) das vorher in die Füllkammer (12) eingefüllte Kaffeepulver in die Infusionskammer (5) drückt und verdichtet, wobei der von dem Verdichtungskolben erfaßte Widerstand das Abschalten des Motors, die Infusion des Kaffees und dann die Laufumkehrung und die Bewegung aufgrund des gelenkig ausgeführten Hakens (21), des mobilen Anschlags (22), der Stange (27) und der mobilen Rückwand (11) nach der Vorderseite der Infusionskammer (5) sowie das Wegrücken der Füllkammer (12) bewirkt, die Stange (27) mit einer Verengung (32) dem Abstreifer (14) die Abwärtsbewegung unter der Aktion einer Feder ermöglicht in dem Moment, in dem die mobile Rückwand an der Vorderseite der Infusionskammer angekommen ist, der gelenkig ausgeführte Haken (21) ist dabei gehoben mittels einer mit der feststehenden Schiene (4) kraftschlüssig verbundenen Rampe (33), und betätigt nicht mehr den mobilen Anschlag, der mobile Teil (6) bringt dann die Sekundär-Zahnstange (9) in Kontakt mit dem mobilen Anschlag (22), der gleichzeitig mit der Füllkammer (12), der mobilen Rückwand (11) und dem Abstreifer (14) in seine ursprüngliche Position zurückgestoßen wird.

10. Vorrichtung gemäß Anspruch 9, dadurch gekennzeichnet, daß der mobile Anschlag (22) so ausgelegt ist, daß er zu Beginn seiner Bewegung eine auf den Kocher (2) montierte Nocke (34) absenken kann, welche auf ein Ventil (35) einwirkt, um den Warmwasser-Versorgungskreislauf zu lüften, und auf diese Weise zu vermeiden, daß das aufgegossene Kaffeepulver genäßt wird und somit seinen Auswurf erleichtert.

11. Vorrichtung gemäß irgendeinem der Ansprüche 1 bis 7, dadurch gekennzeichnet, daß die Antriebseinheit (3) aus einem Zylinder mit doppelter Wirkung besteht, der mittels Druckwasser aus der Pumpe, die ebenfalls das Wasser zum Aufgießen des Kaffees liefert, und daß die Kontrolle der Position des Zylinders sowie die Wassermenge zum Infusion mit Hilfe eines einzigen mit einem programmierbaren und Elektroventile betätigenden Systems assoziierten Dezimeters erfolgt.

12. Vorrichtung gemäß irgendeinem der vorstehenden Ansprüche, dadurch gekennzeichnet, daß der Durchlauf des Warmwassers durch zwei Reihen jeweils über 360 Grad in der Infusionskammer (5) verteilten und in axialer Richtung versetzten peripherischen Bohrungen geschieht, um auf diese Weise eine Progression des Wassers parallel zur Achse der besagten Infusionskammer zu verursachen.
